# EUROPEAN PATENT SPECIFICATION

(11) **EP 3 116 732 B1**
(45) Date of publication and mention of the grant of the patent: **15.07.2020**
(21) Application number: 15762241.6
(22) Date of filing: 11.03.2015
(51) Int. Cl.: B60K 1/04, B60R 16/04, H01M 10/625, B60K 11/02, B60K 11/04, H01G 11/78, H01M 2/10, B60K 1/00, H01M 10/613, H01M 10/6563, H01M 10/6568

(54) **INSTALLATION OF HYBRID COMPONENTS IN A VEHICLE**
INSTALLATION VON HYBRIDEN BAUTEILEN IN EINEM FAHRZEUG
INSTALLATION DE COMPOSANTS HYBRIDES DANS UN VÉHICULE

(30) Priority: 11.03.2014 SE 1450270
(43) Date of publication of application: 18.01.2017
(73) Proprietor: Scania CV AB, 151 87 Södertälje (SE)
(72) Inventor: TSYCHKOV, Alexei, S-191 47 Sollentuna (SE); NESS, Christian, S-144 37 Rönninge (SE)
(74) Representative: Scania CV AB
(86) International application number: PCT/SE2015/050271
(87) International publication number: WO 2015/137869

(56) References cited:
- EP-A1- 2 554 420
- EP-A2- 1 621 389
- WO-A1-2008/115169
- WO-A1-2011/062551
- WO-A2-2006/054134
- DE-A1-102011 109 025
- DE-A1-102012 013 851
- SE-C2- 533 582
- US-A1- 2013 068 546

## Description

### BACKGROUND OF THE INVENTION AND PRIOR ART

The present invention relates to an installation of hybrid components in a vehicle according to the preamble of claim 1.

Hybrid vehicles powered by electricity in combination with some other form of fuel are equipped with an electrical machine that operates, alternating, as a motor and as a generator, an electric energy storage device for storage of electric power and power electronics to control the flow of electric power between the electric energy storage device and the electrical machine. The power electronics may comprise a DC converter and an inverter to lead electric power between the electric energy storage device and an electrical machine. The electric energy storage device and the power electronics unavoidably provide a certain heating during operation. In order for the electric energy storage device and the power electronics to function in a desired manner, they should not be heated to an excessively high temperature. The electric battery should, for example, not be heated over a highest acceptable temperature which, for a certain type of electric energy storage device, may be in the range of 40°C. The power electronics may, however, be heated to a somewhat higher temperature. The electric energy storage device and the power electronics should thus in applicable cases be cooled during operation, which may be effected with a cooling system of a suitable type.

In hybrid vehicles in the form of trucks, most hybrid components except the electrical machine are fitted on a longitudinal frame rail. The electric energy storage device is a power source that may cause fire and damages at collisions when a vehicle drives into the truck from the side.

EP 2 554 420 shows an electric drive module mounted on a longitudinal frame beam of a vehicle by means of a supporting frame. The electric drive module is formed as an autonomous unit including a battery pack, electric converters, direct current converters at least one electrical connection interface and a cooling system with at least one heat exchanger.

### SUMMARY OF THE INVENTION

The objective of the present invention is to provide an installation of hybrid components in a vehicle, wherein the risk of damage to the electric energy storage device at a collision is substantially reduced.

This objective is achieved with the installation of the type specified at the beginning, which is characterised by the features specified in the characterising portion of claim 1. The electric energy storage device may consist of an accumulator with a suitable number of galvanic cells. The electric energy storage device may alternatively comprise capacitors for electrostatic storage. The electric energy storage device is generally a heavy component. According to the invention, the first unit containing the electric energy storage device is attached in a position in adjoining an external surface of the frame rail. This eliminates the risk that the electric energy storage device may give rise to a torque of such a magnitude on the frame rail that the frame rail may be substantially damaged. A second unit, which contains at least one component in a cooling system, is attached in a position at least partly externally of the first unit. The second unit is advantageously of such a size that it may cover the entire first unit arranged internally, and accordingly the electric energy storage device. However, it may be sufficient for the second unit to cover a part of the electric energy storage device. Said component of the cooling system therefore constitutes a physical protection, arranged in front of the first unit and the electric energy storage device. Many components in a cooling system are deformed relatively easily if subjected to the substantial forces arising at a collision. With such a component, a deformation zone is formed in front of the first unit and the electric energy storage device, wherein a great part of the kinetic energy at a collision may be eliminated. The damage which the electric energy storage device may incur at a collision is therefore reduced. Since the energy storage device is well protected, the risk of personal injuries and damage to the vehicles involved in a collision is also reduced.

According to the invention, the second unit comprises a component in the form of a radiator. A radiator in a cooling system usually consists of conduits that are heat transferring components which are made of a metal material with good heat transferring characteristics such as aluminium. A radiator also occupies a relatively large volume. These characteristics entail that it may form a relatively large deformation zone, wherein it may be compressed and absorb kinetic energy in a collision. The risk that the electric energy storage device behind may be damaged at a collision is therefore reduced.

According to the present invention, the second unit is equipped with an external surface, which is defined by the radiator. An air cooled radiator's ability to provide cooling depends on the amount of air which flows through the radiator. The amount of air flowing through the radiator depends on e.g. the size of the radiator. Accordingly, the radiator occupies all of the external surface of the second unit. The radiator contains a circulating coolant, which is adapted to be cooled by air with the ambient temperature. An additional advantage with arranging the radiator on the outside of the electric energy storage device is that it is easily accessible for cleaning and service.

According to one embodiment of the present invention, the second unit also comprises a fan that sucks air through the radiator, and/or a pump that circulates coolant in the cooling system. With the help of the fan, a continuous flow of air having the ambient temperature may be sucked through the radiator. Thus, a good cooling of the coolant is guaranteed in substantially all operating modes. The pump that circulates coolant through the cooling system is also advantageously placed in the second unit. The fan, the pump, an expansion tank and conduits for coolant are components in the cooling system, which may create an additional deformation zone behind the radiator in the second unit.

According to one embodiment of the present invention, the cooling system is adapted to cool the electric energy storage device in the first unit. The electric energy storage device obtains a heating during operation. In order to function optimally, the electric energy storage device must not have an excessively high temperature. In applicable cases, it must therefore be cooled. The cooling of the electric energy storage device is thus achieved with the cooling system, which is mainly arranged in the second unit. Since the second unit is attached on the outside of the first unit, no long conduits are required to lead coolant to and from the first unit, wherein it cools the electric energy storage device.

According to the present invention, the second unit has a height and a length, which at least correspond to the first unit's height and length. Therefore, it is possible to arrange the second unit in a position on the outside of the whole first unit, in which it covers the whole first unit. Accordingly, the risk of a vehicle hitting the first unit in a collision, without first coming into contact with the second unit, is entirely eliminated. The first unit and the second unit may have substantially the same width. The second unit forms a deformation zone in front of the first unit. The wider the second unit, the larger the deformation zone formed in front of the first unit and the electric energy storage device.

According to one embodiment of the present invention, the first unit comprises a container that forms the external surfaces of the first unit and encloses the electric energy storage device. Thus, the electric energy storage device obtains a location that is shielded from surrounding dirt and pollutants. The container may be adapted as a rectangular cuboid, i.e. with six substantially plane sides, and wherein adjacent sides form right angles with each other. It is relatively uncomplicated to attach a first unit with such a shape in connection with an external side of a frame rail in a vehicle.

According to one embodiment of the present invention, the first unit comprises a side equipped with components, which must be accessible at service of the energy storage device. Cable connections and some other components in the electric energy storage device must be accessible for service. Since the first device is adapted as a rectangular cuboid it has an internal side facing the frame rail, an external side facing the second unit, an upward-facing side, a downward-facing side and two sides forming the ends of the first unit. It is suitable that said components requiring service are arranged at one of the two sides defining the ends of the first unit. The second unit may comprise a suspension able to be articulated, so that it is rotatably arranged between an operating position and a service position. Since the second unit is arranged outside of the first unit, it may in some cases get in the way when the electric energy storage device is serviced. In this case, the second unit may be swung out from the operating position to a service position. In the service position the first unit is exposed, providing accessibility for service of said components at one side of the unit's ends. In this case, however, said components requiring service may also be arranged at the unit's external side.

According to one embodiment of the present invention, the installation comprises a third unit, which comprises power electronics adapted to control the flow of electric power between the electric energy storage device and an electrical machine, so that the third unit is attached to the frame rail in a position in front of or behind the first unit and the second unit. The third unit may alternatively be arranged in a position outside the first unit, and in line with the second unit. In this case the third unit may be arranged in front of or behind the second unit, seen in the frame rail's longitudinal direction. The third unit may in this case be attached to the second unit. The power electronics may comprise a DC converter and an inverter to lead electric power between the electric energy storage device and an electrical machine.

According to one embodiment of the present invention, the third unit comprises a container, which forms the third unit's external surfaces and encloses said power electronics. Thus, the power electronics obtain a location that is shielded from surrounding dirt and pollutants. The container may be adapted as a rectangular cuboid, i.e. with six substantially plane sides, and wherein adjacent sides form right angles with each other. It is relatively uncomplicated to attach a third unit with such a shape in connection with an external side of a frame rail in a vehicle. The third unit may have a width, which substantially corresponds to the total width of the first unit and the second unit. Thus, the third unit obtains an external surface that is level with the second unit's external surface.

According to one embodiment of the present invention, the cooling system in the second unit is adapted to cool the power electronics in the third unit. The power electronics are unavoidably heated during operation. In order for the power electronics to function optimally, it must not be heated to an excessively high temperature. However, the power electronics may be heated to a higher temperature than the electric energy storage device. The same cooling system may thus cool both the electric energy storage device in the first device and the power electronics in the third unit. The cooling system may in this case comprise conduits, which first lead cold coolant from the radiator to the first unit for cooling of the electric energy storage device, and conduits which then lead the coolant to the second unit for cooling of the power electronics. In this case, the power electronics are cooled by coolant with a somewhat higher temperature than is the electric energy storage device. Alternatively, the cooling system may comprise two separate cooling circuits. A first cooling circuit that cools the electric energy storage device in the first unit, and a second cooling circuit that cools the power components in the second unit. The separate cooling circuits may be dimensioned in such a way that the electric energy storage device is cooled with coolant having a lower temperature than the coolant that cools the power electronics.

### BRIEF DESCRIPTION OF THE DRAWINGS

Below is a description of, as examples, preferred embodiments of the invention with reference to the enclosed drawings, in which:
- Fig. 1: shows an installation of hybrid components in a vehicle according to the present invention,
- Fig. 2: shows the installation in Fig. 1 in more detail,
- Fig. 3: shows the installation in Fig. 1 in a view from above and
- Fig. 4: shows an alternative installation of hybrid components in a vehicle.

### DETAILED DESCRIPTION OF PREFERRED EMBODIMENTS OF THE INVENTION

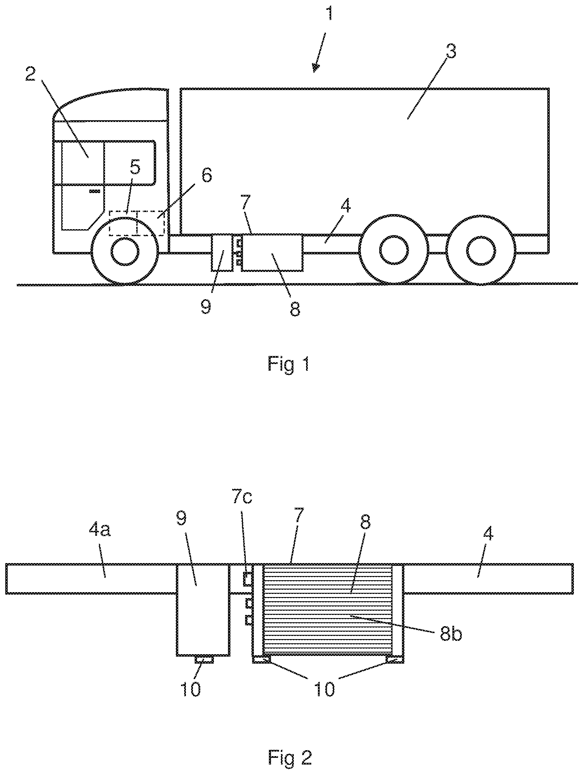

Fig. 1 shows a heavy goods vehicles 1, equipped with a cabin space 2 and a cargo space 3. The body of the heavy goods vehicle 1 comprises two longitudinal frame rails 4. The heavy goods vehicle 1 is a hybrid vehicle, and is operated with a schematically displayed combustion engine 5 and an electrical machine 6. Since the electrical machine 6 functions as a motor, it drives the vehicle 1 with or without the assistance of the combustion engine 5. The electrical machine 6 functions as a generator on occasions when the vehicle 1 is decelerated. The electrical machine 6 may provide deceleration of the vehicle up to a certain braking effect. Where a higher braking effect is required, the braking process is completed by the vehicle's ordinary brakes. The vehicle comprises an installation of several hybrid components that are necessary for the operation of the electrical machine 6. The hybrid components are arranged in three units 7, 8, 9, attached to one of the longitudinal frame rails 4 of the heavy goods vehicle 1.

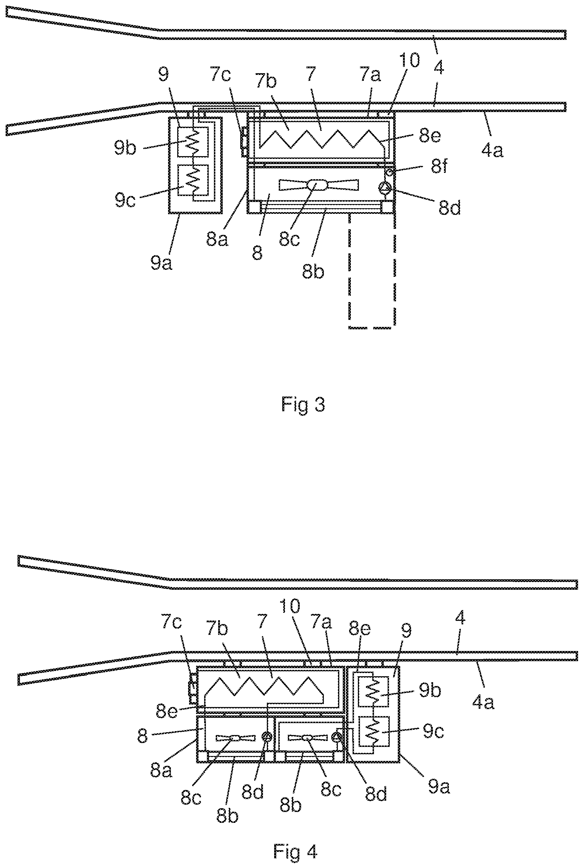

Fig. 2 and 3 show the installation in more detail. Fig. 2 shows the installation in a view from the side and Fig. 3 shows the installation in a view from above. The installation thus comprises three units 7, 8, 9. The units 7, 8, 9 are attached on an outside 4a of the longitudinal frame rail 4, with the help of attaching elements in the form of a number of consoles 10. The consoles 10 have a vertical section that is adapted to be attached against the external side surface 4a, and a horizontal section adapted to form an underlying support and fastening area for the units 7, 8, 9. The first unit 7 is attached in a position adjoining the frame rail's external surface 4a, and the second hybrid components 8 is attached in a position outside the first unit 7. The separate units 7, 8, 9 are in this case adapted as rectangular cuboids. Thus, they have six plane sides, wherein adjacent sides form a right angle with each other. The first unit 7 and the second unit 8 have corresponding dimensions. Accordingly, they have corresponding dimensions with respect to length and height. Accordingly, the second unit 8 may fully cover the first unit 7. The first unit 7 and the second unit 8 also have the same width. The third unit 9 has a width which, in a fitted state, corresponds to the total width of the first unit 7 and the second unit 8. An installation with such three units 7, 8, 9 may thus be made compact and occupy a relatively small part of the longitudinal frame rail 4.

The first unit 7 comprises a container in the form of a box-like construction 7a, forming the external surfaces of the rectangular cuboid. The box-like construction's 7a walls enclose an electric energy storage device 7b. The box-like construction 7a thus protects the electric energy storage device 7b from surrounding dirt and pollutants. The electric energy storage device 7b may comprise an accumulator with a suitable number of galvanic cells. The electric energy storage device 7b may advantageously provide electric power with a relatively high voltage. The electric energy storage device 7b is relatively heavy. Since the first unit 7, enclosing the electric energy storage device 7b, is attached in a position adjoining an external side surface 4a of the frame rail, the electric energy storage device's 7b gravity only obtains a short force vector, with which it applies a torque on the longitudinal frame rail 4. Accordingly, the frame rail 4 is subjected only to a minor torque by the electric energy storage device 7b. The electric energy storage device 7b has an inner resistance, resulting in it being heated during operation. Most types of electric energy storage devices 7b have a suitable operating temperature within a relatively narrow temperature interval, which may, for example, be within the area 15 - 30°. The performance of the electric energy storage device 7b is significantly reduced if it has too high a temperature. The electric energy storage device therefore needs to be cooled during operation, in applicable cases.

The second unit 8 comprises a wall construction 8a with a number of walls, a ceiling and baseplate, forming an internal space for assembly of several components in a cooling system. The cooling system comprises a radiator 8b, which advantageously forms at least a part of an external side of the second unit 8. The radiator 8b advantageously forms the entire external side surface of the second unit 8. Thus, substantially the entire external side of the second unit 8 may be used to receive air having ambient temperature, which is led through the radiator. The radiator 8a in this case comprises an inlet tank for receipt of coolant, a cooling section where the coolant is cooled by air, and an outlet tank where the cooled coolant is received. The cooling system also comprises a fan 8c, which sucks air through the radiator's 8b cooling section, and a pump 8d which circulates coolant in a line circuit 8e, partly arranged inside the second unit 8. The line circuit 8e leads cold coolant from the radiator 8b to the first unit 7, where it cools the electric energy storage device 7b. The line circuit then leads the coolant to the third unit 9 for cooling of power electronics, used to control the flow of electric power between the electrical machine 6 and the electric energy storage device 7b. The coolant is then returned to the radiator 8a to be cooled again, before it is reused to cool said hybrid components in the first unit 7 and in the third unit 9.

The first unit 7 comprises an end surface, at one side, where the cable connection 7c and other components of the electric energy storage device 7b have been arranged. These components must be accessible at service of the electric energy storage device 7b. For this reason, the first unit 7 is attached on the frame rail 4 at a certain distance from the third unit 9. Thus, a space is created between the third unit 9 and the first unit 7, facilitating service of the cable connections 9c and the other components arranged on the end surface of the first unit 7. In order to further improve accessibility to the cable connections 9c and the other components requiring service, the second unit 8 is equipped with a suspension 8e that may be articulated. The second unit 8 may thus be swung out from an operating position to a service position, as displayed with dashed lines in Fig. 3. When the second unit 8 is in the extended service position, a good accessibility is obtained for a person carrying out service works of the electric energy storage device 7b in the first unit 7.

The third unit 9 also comprises a container in the form of a box-like construction 9a, which in this case encloses the power electronics controlling the flow of electric power between the electrical machine 6 and the electric energy storage device 7b. The power electronics comprise components in the form of a DC converter 9b and an inverter 9c. The box-like construction 9a protects the DC converter 9b and the inverter 9c from surrounding dirt and pollutants. The DC converter 9b and the inverter 9c are heated during operation, depending on how hard they are working. They should not have a temperature above an upper threshold in order to function as desired. They may, however, be heated to a higher temperature than the electric energy storage device 7b in the first unit 7. The coolant in the cooling system therefore also cools the DC converter 9b and the inverter 9c. In this case, the third unit 9 is attached to the frame rail 4 in a position in front of the first unit 7 and the second unit 8. Thus, the length of the electric cables connecting the power electronics in the third unit 9 with the electrical machine 6 may be rather short, as may also the electric cables that connect the power electronics with the electric energy storage device 7b.

An electric energy storage device 7b is a costly component that should be protected from damage. It is also a powerful source of energy that may release a large amount of energy at a collision, and cause fire and damage to persons and vehicles. In order to reduce the risk of the electric energy storage device incurring and causing damage, fastening elements 10, which support the electric energy storage device, are equipped with weakened areas, so that they are deformed in a predetermined manner when the energy storage device 7a is subjected to a substantial power impact. According to the present invention, the second unit 8 is arranged outside of the first unit 7, in a position making it cover the entire first unit 7. A vehicle that drives into the side of the vehicle wherein the energy storage 7b is arranged, will therefore initially hit the second unit 8, before the vehicle comes into contact with the first unit 7 and the electric energy storage device 7b. A radiator 8b of the cooling system thus forms an external side of the second unit 8. Radiators 8b are generally made of a metal material with good heat transferring characteristics, such as for example aluminium. Radiators 8b thus have a construction with a large number of flow channels for air. Radiators 8b thus have a construction, which is very well suited to be deformed and absorb kinetic energy in a collision. Other components in the second unit 8, such as the wall construction 8a, the fan 8c, the pump 8d, an expansion tank and the line circuit 8e also provide a deformation absorbing kinetic energy in a collision. Since the second unit 8 is as wide as the first unit 7, it creates a relatively wide deformation zone outside of the first unit 7. Accordingly, the electric energy storage device 7b obtains a very shielded position inside the first unit 7 and behind the second unit 8. The second unit 8 with its component parts thus creates a deformation zone which, together with the deformable fastening elements 10, results in a clear reduction of the risk of damage to the electric energy storage device 7b at a side collision.

Fig. 4 shows an alternative installation of the units 7, 8, 9. In this case, the third unit 9 is attached to the frame rail 4 in a position behind the first unit 7 and the second unit 8. In this case, the units may be assembled very closely together on the frame rail 4. The components 7a for connection of the electric cables are here exposed, which facilitates service of the electric energy storage device 7b. The electric cables connected to the power electronics in the second unit 8 must, however, be somewhat longer. Another difference is that the second unit 8 in this case contains a cooling system with two separate cooling circuits. The cooling system comprises a first cooling circuit that cools the electric energy storage device 7b in the first unit, and a second cooling circuit that cools the power electronics 9b, 9c in the third unit 9. The respective cooling circuits each comprise a radiator 8b. The two radiators together form an external side surface of the second unit 8. Thus, a large amount of air may be led through the radiators and provide a good cooling of the coolant in the respective cooling circuits. The size of the radiators 8b may be related to the cooling required by the electric energy storage device 7b and by the power components 9b, 9c.

The two cooling circuits each comprise a fan 8c, a coolant pump 8d, an expansion tank and line circuits 8e that lead coolant to the first unit 7 and the third unit 9, respectively. The second unit 8 may comprise a box-like construction 8a, forming an external housing containing components from both the cooling circuits. Alternatively, the second unit 8 may comprise two box-like constructions 8a, each of which contains components from one of the cooling circuits. In this case as well, the second unit 8 has a size and a position making it fully cover the first unit 7 that contains the electric energy storage device 7b. The second unit's 8 component parts accordingly form a physical protection, creating a deformation zone in front of the first unit 7, wherein kinetic energy is absorbed during a collision. Accordingly, the risk of damage to the electric energy storage device 7b at a side collision is clearly reduced.

The invention is in no way limited to the embodiments displayed in the drawings, but may be varied freely within the scope of the patent claims.

## Claims

1. Installation of hybrid components for a vehicle (1), wherein the vehicle (1) comprises a frame rail (4) having an extension in the vehicle's longitudinal direction, wherein the installation comprises a first unit (7) comprising an electric energy storage device (7b), a second unit (8) comprising at least one component (8b-e) of a cooling system, and fastening elements (10) with which the first unit (7) and the second unit (8) are to be fastened on the frame rail (4), wherein the first unit (7) is adapted to be attached in a position adjoining a side surface (4a) of the frame rail (4), and the second unit (8) is adapted to be attached at a greater distance from the frame rail (4) and in a position outside of the first unit (7), and wherein the second unit (8) comprises a component in the form of a radiator (8b), containing a circulating coolant that is adapted to be cooled by air with ambient temperature, **characterised in that** the second unit (8) has a height and a length which at least corresponds to the height and the length of the first unit (7) and that the second unit (8) is equipped with an external surface, which is defined by the radiator, wherein the radiator is designed to occupy all of the external surface of the second unit (8) in a fastened state.

2. Installation according to any one of the previous claims, **characterised in that** the second unit (8) also comprises a fan (8c), which sucks air through the radiator (8b) and/or a pump (8d) that circulates coolant in the cooling system.

3. Installation according to claim 1 or 2, **characterised in that** the cooling system is adapted to cool the electric energy storage device (7b) in the first unit (7).

4. Installation according to any one of the previous claims, **characterised in that** the first unit (7) comprises a container (7a), forming the external sides of the first unit (7) and enclosing the electric energy storage device (7b).

5. Installation according to any one of the previous claims, **characterised in that** the first unit (7) comprises a side equipped with components (7c) requiring accessibility at service of the energy storage device.

6. Installation according to any one of the previous claims, **characterised in that** the second unit (8) comprises a suspension (8f) that may be articulated, so that it is rotatably arranged between an operating position and a service position.

7. Installation according to any one of the previous claims, **characterised in that** it comprises a third unit (9), comprising power electronics (9b, 9c), adapted to control the flow of electric power between the electric energy storage device (7b) and an electrical machine (6), wherein the third unit (9) is attached to the frame rail (4) in a position in front of or behind the first unit (7) and the second unit (8).

8. Installation according to claim 7, **characterised in that** the third unit (9) comprises a container (9a), forming the external sides of the third unit (9) and enclosing said power electronics (9b, 9c).

9. Installation according to claim 7 or 8, **characterised in that** the third unit (9) has a width, which substantially corresponds to the total width of first unit (7) and the second unit (8).

10. Installation according to any one of the previous claims 7-9, **characterised in that** the cooling system is adapted to cool the power electronics (9a, 9b) in the third unit (9).

## Patentansprüche

1. Installation von Hybridbauteilen für ein Fahrzeug (1), wobei das Fahrzeug (1) einen Längsträger (4) mit einer Erstreckung in der Längsrichtung des Fahrzeugs aufweist, wobei die Installation eine erste Einheit (7) mit einer Speichereinheit (7b) für elektrische Energie, eine zweite Einheit (8) mit wenigstens einer Komponente (8b-e) eines Kühlsystems und Befestigungselemente (10) umfasst, mit denen die erste Einheit (7) und die zweite Einheit (8) an dem Längsträger (4) zu befestigen sind, wobei die erste Einheit (7) dazu ausgeführt ist, an einer Stelle angrenzend an eine Seitenfläche (4a) des Längsträgers (4) angebracht zu werden, und die zweite Einheit (8) dazu ausgeführt ist, in einem größeren Abstand von dem Längsträger (4) und an einer Stelle außerhalb der ersten Einheit (7) angebracht zu werden, und wobei die zweite Einheit (8) eine Komponente in Gestalt eines Kühlers (8b) aufweist, der ein zirkulierendes Kühlmittel enthält, welches dazu eingerichtet ist, durch Luft mit Umgebungstemperatur gekühlt zu werden,
**dadurch gekennzeichnet, dass** die zweite Einheit (8) eine Höhe und eine Länge hat, die mindestens der Höhe und der Länge der ersten Einheit (7) entspricht, und dass die zweite Einheit (8) mit einer Außenfläche versehen ist, die durch den Kühler definiert ist, wobei
der Kühler dazu ausgelegt ist, in einem befestigten Zustand die gesamte Außenfläche der zweiten Einheit (8) einzunehmen.

2. Installation nach dem vorhergehenden Anspruch,
**dadurch gekennzeichnet, dass** die zweite Einheit (8) ferner einen Lüfter (8c) umfasst, der Luft durch den Kühler (8b) saugt, und/oder eine Pumpe (8d), die Kühlmittel in dem Kühlsystem zirkuliert.

3. Installation nach Anspruch 1 oder 2,
**dadurch gekennzeichnet, dass** das Kühlsystem dazu eingerichtet ist, die Speichereinrichtung (7b) für elektrische Energie in der ersten Einheit (7) zu kühlen.

4. Installation nach einem der vorhergehenden Ansprüche,
**dadurch gekennzeichnet, dass** die erste Einheit (7) einen Behälter (7a) umfasst, der die Außenseiten der ersten Einheit (7) bildet und die Speichereinheit (7b) für elektrische Energie umschließt.

5. Installation nach einem der vorhergehenden Ansprüche,
**dadurch gekennzeichnet, dass** die erste Einheit (7) eine Seite umfasst, die mit Bauteilen (7c) ausgerüstet ist, welche bei einer Wartung der Energiespeichereinrichtung eine Zugänglichkeit erfordern.

6. Installation nach einem der vorhergehenden Ansprüche,
**dadurch gekennzeichnet, dass** die zweite Einheit (8) eine Aufhängung (8f) umfasst, die verschwenkt werden kann, sodass sie zwischen einer Betriebsstellung und einer Wartungsstellung drehbar angeordnet ist.

7. Installation nach einem der vorhergehenden Ansprüche,
**dadurch gekennzeichnet, dass** sie eine dritte Einheit (9) mit Leistungselektronik (9b, 9c) umfasst, welche dazu eingerichtet ist, den Fluss elektrischen Stroms zwischen der Speichereinrichtung (7b) für elektrische Energie und einer elektrischen Maschine (6) zu steuern, wobei die dritte Einheit (9) an dem Längsträger (4) an einer Stelle vor oder hinter der ersten Einheit (7) und der zweiten Einheit (8) angebracht ist.

8. Installation nach Anspruch 7,
**dadurch gekennzeichnet, dass** die dritte Einheit (9) einen Behälter (9a) aufweist, der die Außenseiten der dritten Einheit (9) bildet und die Leistungselektronik (9b, 9c) umschließt.

9. Installation nach Anspruch 7 oder 8,
**dadurch gekennzeichnet, dass** die dritte Einheit (9) eine Breite hat, die im Wesentlichen der Gesamtbreite der ersten Einheit (7) und der zweiten Einheit (8) entspricht.

10. Installation nach einem der vorhergehenden Ansprüche 7 bis 9,
**dadurch gekennzeichnet, dass** das Kühlsystem dazu eingerichtet ist, die Leistungselektronik (9a, 9b) in der dritten Einheit (9) zu kühlen.

## Revendications

1. Installation de composants hybrides pour un véhicule (1), dans laquelle le véhicule (1) comprend un rail de châssis (4) ayant une extension dans la direction longitudinale du véhicule, dans lequel l'installation comprend une première unité (7) comprenant un dispositif de stockage d'énergie électrique (7b), une deuxième unité (8) comprenant au moins un composant (8b-e) d'un système de refroidissement, et des éléments de fixation (10) avec lesquels la première unité (7) et la deuxième unité (8) doivent être fixées sur le rail de châssis (4), dans lequel la première unité (7) est adaptée pour être fixée dans une position attenante à une surface latérale (4a) du rail de châssis (4), et la deuxième unité (8) est adaptée pour être attachée à une plus grande distance du rail de châssis (4) et dans une position à l'extérieur de la première unité (7), et dans lequel la deuxième unité (8) comprend un composant sous la forme d'un radiateur (8b), comprenant un liquide de refroidissement en circulation qui est adapté pour être refroidi par air à température ambiante, **caractérisée en ce que** la deuxième unité (8) a une hauteur et une longueur qui correspondent au moins à la hauteur et à la longueur de la première unité (7) et que la deuxième unité (8) est équipée d'une surface externe, qui est définie par le radiateur, dans laquelle
le radiateur est conçu pour occuper toute la surface externe de la deuxième unité (8) dans un état fixé.

2. Installation selon l'une quelconque des revendications précédentes, **caractérisée en ce que** la deuxième unité (8) comprend également un ventilateur (8c) qui aspire l'air à travers le radiateur (8b) et/ ou une pompe (8d) qui fait circuler le liquide de refroidissement dans le système de refroidissement.

3. Installation selon la revendication 1 ou 2, **caractérisée en ce que** le système de refroidissement est adapté pour refroidir le dispositif de stockage d'énergie électrique (7b) dans la première unité (7).

4. Installation selon l'une quelconque des revendications précédentes, **caractérisée en ce que** la première unité (7) comprend un récipient (7a), formant les côtés externes de la première unité (7) et fermant le dispositif de stockage d'énergie électrique (7b).

5. Installation selon l'une quelconque des revendications précédentes, **caractérisée en ce que** la première unité (7) comprend un côté équipé de composants (7c) nécessitant une accessibilité au service du dispositif de stockage d'énergie.

6. Installation selon l'une quelconque des revendications précédentes, **caractérisée en ce que** la deuxième unité (8) comprend une suspension (8f) qui peut être articulée, afin qu'elle soit agencée de manière rotative entre une position de fonctionnement et une position de service.

7. Installation selon l'une quelconque des revendications précédentes, **caractérisée en ce qu'**il comprend une troisième unité (9), comprenant l'électronique de puissance (9b, 9c), adaptée pour contrôler le flux d'énergie électrique entre le dispositif de stockage d'énergie électrique (7b) et un machine électrique (6), dans laquelle la troisième unité (9) est attachée au rail de châssis (4) dans une position devant ou derrière la première unité (7) et la deuxième unité (8).

8. Installation selon la revendication 7, **caractérisée en ce que** la troisième unité (9) comprend un récipient (9a), formant les côtés externes de la troisième unité (9) et englobant ladite électronique de puissance (9b, 9c).

9. Installation selon la revendication 7 ou 8, **caractérisée en ce que** la troisième unité (9) a une largeur, qui correspond substantiellement à la largeur totale d'une première unité (7) et de la deuxième unité (8).

10. Installation selon l'une quelconque des revendications précédentes 7-9, **caractérisée en ce que** le système de refroidissement est adapté pour refroidir l'électronique de puissance (9a, 9b) dans la troisième unité (9).
